# EUROPEAN PATENT APPLICATION

(11) **EP 2 006 092 A1**
(43) Date of publication of application: **24.12.2008**
(21) Application number: 08155539.3
(22) Date of filing: 01.05.2008
(51) Int. Cl.: B41C 1/10

(54) **Positive photosensitive element comprising vinyl polymer**

(30) Priority: 05.05.2007 US 744866
(71) Applicant: Chengdu Core Polytech. Co., Ltd., Chengdu Sichuan (CN)
(72) Inventor: Yu, Yisong, Richmond British Columbia V7E4G6 (CA)
(74) Representative: Curtis, Philip Anthony

(57) **Abstract**

A positive-working photosensitive composition for use in making an imageable element comprises one or more vinyl copolymers wherein said vinyl copolymer are homopolymer or copolymer containing monomers comprising at least two functional groups such as HOOC-C=C-CONH-R, and may further comprise a converter substance for converting radiation into heat. The converter substance may be selected to have an absorption spectrum that is optimized to absorb at the wavelength of imaging radiation. The composition may be coated onto a suitable substrate to create a lithographic printing precursor. The precursor may be imagewise irradiated with radiation and optionally developed with a developer liquid to produce a lithographic printing master. A positive-working lithographic printing precursor may be prepared using the composition.

## Description

### Field of the Invention

This invention relates to a photosensitive composition and a positive-working element useful as sensitive to a light ray in a near infrared wavelength region.

Particularly, it relates to a positive photosensitive composition suitable for direct plate making by means of a semiconductor laser or a YAG laser and a positive photosensitive lithographic printing plate.

### Background of the Invention

Planographic or lithographic printing is the process of printing from specially prepared planar surfaces, some areas of which are capable of accepting lithographic ink or oil, whereas other areas, when moistened with water, will not accept the ink or oil. The areas which accept ink or oil form the printing image areas and the areas which reject the ink or oil form the background areas.

Photosensitive compositions have been widely employed in areas such as printed circuit board (PCB) and lithographic printing plate. Typically these compositions are coated as a layer onto a substrate, dried and/or cured, and then imagewise irradiated with suitable radiation or particle beams. Subsequent to irradiation the irradiated area could have different properties from the unirradiated areas. In some cases the imagewise irradiation directly causes the irradiated areas to be removed or ablated. In other cases the chemical behavior of the irradiated area is changed by the irradiation process, one example being that the irradiated area could become more or less soluble in a suitable liquid than an unirradiated area. In yet other cases the irradiated area changes its affinity for some or other liquid, typically either ink, oil, water or fountain solution, as compared with the unirradiated areas.

Planographic or lithographic printing is the most commonly used form of printing today. Lithographic printing involves creating printing and non-printing areas on a suitable planar lithographic printing plate precursor, substantially on a common planar surface. Printing and non-printing areas could be arranged with imagewise irradiation to have different affinities for printing ink and or water. When the areas of the coating not irradiated ultimately form the printing areas of the image, then the precursor is referred to as "positive working". Conversely, when the printing area is established by the aforementioned irradiation or the particle beam, then the lithographic printing plate precursor comprising the substrate and the dried and or cured layer of imageable composition is referred to as being "negative working".

In a conventional processe for producing lithographic printing plate or printed circuit board, a film original is placed on a radiation-sensitive layer. The layer is then irradiated through the original with ultraviolet and/or visible light. Such method of working is cumbersome and labor intensive. In last ten years, laser direct imaging methods (LDI) have been widely developed and applied for producing lithographic printing plate or printed circuit board on the basis of digital data from a computer without requiring the intermediate processing of a photographic film. LDI offers many advantages such as line quality, just-in-time processing, improved manufacturing yields, elimination of film costs, and other recognized benefits.

In conventional positive working processed plates, the photosensitive layer contained quinonediazide compound, the solubility of the alkali-soluble resin in the alkali developer is suppressed by the presence of the quinonediazide compound. On the other hand, by the irradiation of ultraviolet light, the quinonediazide compound will be photochemically decomposed to form indenecarboxylic acid, whereby the above solubility-suppressing effect will be lost, and the solubility of the above photosensitive layer in the alkali developer will rather be improved. Namely, the positive image-forming mechanisms of the photosensitive layer containing the quinonediazide compound is attributable to the difference in solubility as between the exposed portion and the non-exposed portion due to the chemical change as described above.

Printing plate having a photosensitive layer containing an alkali-soluble resin and a quinonediazide compound on a substrate has been known as a positive photosensitive lithographic printing plate capable of forming a positive image by irradiation of ultraviolet light through a silver salt masking film original, followed by development by means of an aqueous alkali solution.

However, the conventional positive photosensitive lithographic printing plate having a photosensitive layer containing a quinonediazide compound has had a drawback that it must be handled under yellow light, as it has sensitivity to ultraviolet light. Furthermore they have a problem of sensitivity in view of the storage stability and they show a lower resolution. The heat mode printing plate precursors are replacing the photosensitive mode printing plate precursors.

JP-A-60-61 752 discloses an attempt to eliminate the need for a film origin and to obtain a printing plate directly from computer data. Because the photosensitive coating is not sensitive enough to be directly exposed with a laser, it was proposed to coat a silver halide layer on top of the photosensitive coating. The silver halide may then directly be exposed by means of a laser under the control of a computer. Subsequently, the silver halide layer is developed leaving a silver image on top of the photosensitive coating. That silver image then serves as a mask in an overall exposure of the photosensitive coating. After the overall exposure the silver image is removed and the photosensitive coating is developed. Such method has the disadvantage that a complex development and associated developing liquids are needed.

Another attempt has been made wherein a metal layer or a layer containing carbon black is covered on a photosensitive coating. This metal layer or a layer containing carbon is then ablated by means of a laser so that an image mask on the photosensitive layer is obtained. The photosensitive layer is then overall exposed by UV-light through the image mask. After removal of the image mask, the photosensitive layer is developed to obtain a printing plate. Such method is disclosed in for example GB-1 492 070, but still has the disadvantage that the image mask has to be removed prior to development of the photosensitive layer by a cumbersome processing.

U.S. Pat. No. 5,340,699 describes a negative working IR-laser recording imaging element. The IR-sensitive layer comprises a resole resin, a novolac resin, a latent Bronsted acid and an IR-absorbing substance. The printing results of a lithographic plate obtained by irradiating and developing said imaging element are poor.

EP784233 discloses a negative chemical amplification type photosensitive composition comprising a resin selected from novolak and a polyvinylphenol, an amino compound derivative capable of crosslinking the resin, an infrared light-absorbing agent having a specific structure, and a photo-acid-generator.

The performance of such techniques may be not practically adequate. For example, in a case of a negative photosensitive material which requires heat treatment after exposure, it is considered that an acid generated from the exposure acts as a catalyst, and that the crosslinking reaction proceeds during the heat treatment, to form a negative image. However, in such a case, the stability of the image quality was not necessarily satisfactory, due to variation of the treating conditions. On the other hand, in a case of a positive photosensitive material which does not require such heat treatment after exposure, the contrast between an exposed portion and a non-exposed portion was inadequate. Consequently, the non-image portion was not sufficiently removed, or the film-remaining ratio at the image portion was not sufficiently maintained. Further, the printing resistance was not necessarily adequate.

Positive-working direct laser addressable lithographic printing precursors based on phenolic resins sensitive to UV, visible and/or infrared radiation have been described in U.S. Patent 4,708,925, U.S. Patent 5,372,907, U.S. Patent 5,491,046, US Patent 5,840,467, U.S. Patent 5,962,192 and U.S. Patent 6,037,085.

U.S. Pat. No. 4,708,925 discloses a photosensitive printing plate provided with a photosensitive layer containing phenolic resin and onium salt, such as triphenylsulfoniumhexafluoro-phosphate with the native solubility of the resin being restored upon photolytic decomposition of the onium salt. This composition may optionally contains an IR-sensitizer. After image-wise exposing said imaging element to UV -visible-or IR-radiation followed by a development step with an aqueous alkali liquid there is obtained a positive or negative working printing plate. The printing results of a lithographic plate obtained by irradiating and developing said imaging element are poor.

U.S. Patent 5,372,907 and U.S. Patent 5,491,046 disclose a radiation-sensitive composition especially adapted to prepare a lithographic printing plate that is sensitive to both ultraviolet and infrared radiation and capable of functioning in either a positive-working or negative-working manner is comprised of a resole resin, a novolac resin, a latent Bronsted acid and an infrared absorber. The solubility of the composition in aqueous alkaline developing solution is both reduced in exposed areas and increased in unexposed areas by the steps of imagewise exposure to activating radiation and heating. The printing results of a lithographic plate obtained by irradiating and developing said imaging element are poor.

In newer generation of positive working processed plates, polymers are chosen that have a tendency for hydrogen bonding, either with themselves or with other additives. The hydrogen bonding is employed to render the otherwise aqueous alkaline soluble polymer less soluble. When irradiated, the hydrogen bonding is disrupted and the polymer becomes, at least temporarily, more soluble in the developer. Again light-to-heat-converter substances may be added to drive the process using selected wavelengths of light and additional inhibitor substances may be added to shift the baseline of the inhibition process.

US patent US 5,840,467 describes a positive working image recording material, which comprises a binder, a light-to-heat converter substance capable of generating heat by the absorption of infrared rays or near infrared rays, and a heat-decomposable substance capable of substantially lowering the solubility of the material when the substance is in the undecomposed state. Specific examples of the heat-decomposable substance include diazonium salts and quinonediazides. Specific examples of the binder include phenolic, acrylic and polyurethane resins. Various pigments and dyes are given as potential light-to-heat converter substances, including specifically cyanine dyes. The image recording material may be coated onto suitable substrates to create an imageable element. Elements so created may be imagewise irradiated with laser light and the irradiated areas removed with an alkaline developer.

In U.S. Patents 5,962,192 and 6,037,085, thermal laser-sensitive compositions are described based on azide-materials wherein a dye component is added to obtain the requisite sensitivity.

Significant weight loss is one major issue shared by most positive working processed plates. This weight loss is a result of the dissolution of unimaged areas in the developer when the plate is being processed. In order to reduce weight loss, the contrast between imaged and unimaged areas becomes a careful balance between developer strength and development time. Much of this phenomenon may be due to the fact that these plates rely on fundamentally the difference in dissolution rate of imaged and unimaged areas in alkaline aqueous soluble polymers.

Another major issue with positive working processed plates is their relatively weaker solvent resistance. This behavior affects plate compatibility with some press-room chemicals and decreases plate performance. In order to overcome this drawback, some methods such as the incorporation into the light-sensitive composition of suitable crosslinking agents and a post-heat treatment, and even ultraviolet illumination or other curing processes, are used.

It is clear that there remains a need for a positive-working plate requiring no pre-development treatment or post-development baking/curing in order to get good durability and very good run lengths. At the same time, the need remains for positive plates that have good solvent resistance in unimaged areas and lower weight loss.

### Summary of the Invention

In one aspect this invention provides a positive photosensitive element, for use with a radiation source, comprising one or more vinyl polymers and may additionally comprise a radiation-heat converter substance. The converter substance may be selected to have an absorption spectrum that absorbs at the wavelength of imaging radiation. The positive photosensitive element may further optionally comprise one or more colorants, one or more surfactants, one or more solvents, one or more crosslinking agents, one or more catalysts, one or more alkaline soluble resins, and one or more additives to improve film forming, lubricity, adhesion, degassing, dry flow or other such property to enhance integrity and/or resilience of the product produced with the composition.

In a further aspect of the invention, the composition may be coated onto a suitable substrate to form a layer of radiation-sensitive material, thereby creating an imageable element. While the sensitivity of the imageable element is not limited to any particular radiation, the preferred form of radiation is electromagnetic, and preferred wavelengths of radiation-sensitivity are between 700nm and 1300nm, more preferably between 700nm and 1000nm. Alternatively, the composition may be coated onto a suitable substrate to form a layer of radiation-sensitive material, thereby creating a lithographic printing precursor. The layer of radiation-sensitive material is capable of undergoing a change in solubility in at least one of water, an aqueous medium, a non-aqueous inorganic liquid and an organic liquid upon being exposed to imaging radiation. The lithographic printing precursor may be imagewise irradiated with radiation and optionally developed with a developer liquid to produce a lithographic printing master. A positive-working lithographic printing precursor may be prepared using the composition and the lithographic precursors may be of the processed type.

The invention provides an imageable element of good sensitivity, solvent-resistance and durability for use with a radiation source in printing applications, such as conventional imaging systems, computer-to-plate systems or other direct imaging elements and applications.

### Detailed Description of the Preferred Embodiment

In one aspect of the present invention a composition comprises at least one vinyl polymer. The composition may additionally comprise a converter substance, capable of converting radiation into heat. The converter substance may be selected to have an absorption spectrum that absorbs at the wavelength of imaging radiation. The positive photosensitive element may further optionally comprise one or more colorants, one or more surfactants, one or more solvents, one or more crosslinking agents, one or more catalysts, one or more alkaline soluble resins, and one or more additives to improve film forming, lubricity, adhesion, degassing, dry flow or other such property to enhance integrity and/or resilience of the product produced with the composition. While the radiation converted by the converter substance may be particle beams, X-rays or light, light is preferred. Preferred wavelengths of radiation-sensitivity for the converter substance are between 700nm and 1300nm, and more preferably between 700nm and 1000nm. The composition may further comprise a suitable solvent. In an alternative embodiment of the composition of the present invention, the constituents of the composition are mixed under melt or flow conditions.

In one aspect of the present invention an imageable element is prepared by coating a suitable substrate with the composition of this invention and drying or curing or otherwise processing the coated layer, thereby causing a layer of radiation-sensitive material to be formed on the substrate, the layer of radiation-sensitive material comprising one or more vinyl polymers.

In one aspect of the present invention an imageable element comprises, on a surface of a substrate, a layer of radiation-sensitive material, the radiation-sensitive material comprising at least one vinyl polymer. The radiation-sensitive material may further comprise a converter compound capable of converting radiation into heat. The converter compound may be selected to absorb at the wavelength of the imaging radiation used to image the layer of radiation-sensitive material. The radiation-sensitive material may further optionally comprise one or more colorants, one or more surfactants, one or more crosslinking agents, one or more catalysts, one or more alkaline soluble resins, and one or more additives to improve film forming, lubricity, adhesion, degassing, dry flow or other such property to enhance integrity and/or resilience of the product produced with the composition. The layer of radiation-sensitive material is capable of undergoing a change in solubility in at least one of water, an aqueous medium, a non-aqueous inorganic liquid and an organic liquid upon being exposed to imaging radiation. While the radiation-sensitive material may be formulated to be sensitive to various forms of radiation, including particle beams, X-rays or light, light is preferred. Preferred wavelengths of radiation-sensitivity for the radiation-sensitive material are between 700nm and 1300nm, and more preferably between 700nm and 1000nm.

In one aspect of this invention a lithographic printing plate precursor comprises, on a surface of a substrate, a layer of radiation-sensitive material, the radiation-sensitive material comprising one or more vinyl polymers. The radiation-sensitive material may additionally comprise a converter substance, capable of converting radiation into heat. The converter compound may be selected to absorb at the wavelength of the imaging radiation used to image the layer of radiation-sensitive material. The radiation-sensitive material may further optionally comprise one or more colorants, one or more surfactants, one or more crosslinking agents, one or more catalysts, one or more alkaline soluble resins, and one or more additives to improve film forming, lubricity, adhesion, degassing, dry flow or other such property to enhance integrity and/or resilience of the product produced with the composition. In one embodiment of the lithographic printing precursor of this invention, the layer of radiation-sensitive material undergoes a change in solubility in at least one of water, an aqueous medium, a non-aqueous inorganic liquid and an organic liquid upon being exposed to radiation. The layer of radiation-sensitive material of the lithographic printing precursor may have, coated over it, a protective layer, which protective layer may be removable on-press or off-press by treatment with water, fountain solution or printing ink. While the radiation-sensitive material may be formulated to be sensitive to various wavelengths of light, preferred wavelengths of radiation-sensitivity for the radiation-sensitive material are between 700nm and 1300nm, and more preferably between 700nm and 1000nm.

In one aspect of the present invention, a lithographic printing master is made from the lithographic printing plate precursor of this invention by imagewise irradiation of the lithographic printing plate precursor using radiation, which radiation may be one of ultraviolet, visible and infrared light. If the lithographic printing plate precursor of the present invention is one that undergoes a change in solubility upon irradiation, then, in a further additional step, the imagewise irradiated lithographic printing plate precursor may be treated with a developer comprising at least one of water, an aqueous medium, a non-aqueous inorganic liquid and an organic liquid to remove one of the irradiated areas and the unirradiated areas of the lithographic printing plate precursor. The imagewise irradiating may be via area illumination through a mask, using light of ultraviolet, visible or infrared wavelengths, or it may be via laser direct imaging. Preferred wavelengths of radiation in laser direct imaging are between 700nm and 1300nm, and more preferably between 700nm and 1000nm. In order to further extend the run-length and durability of the lithographic printing master, the irradiated, or irradiated and developed, lithographic printing plate precursor of this invention may optionally be heat-treated after irradiation, or after irradiation and development, to effect crosslinking within the remaining radiation-sensitive material based on the optionally incorporated crosslinking agents and or catalysts.

In one embodiment of this invention, a lithographic printing plate precursor comprises, on a surface of a hydrophilic substrate, a layer of radiation-sensitive material, the radiation-sensitive material comprising one or more vinyl polymers. The radiation-sensitive material may additionally comprise a converter substance, capable of converting radiation into heat. The converter compound may be selected to absorb at the wavelength of the imaging radiation used to image the layer of radiation-sensitive material. The radiation-sensitive material may further optionally comprise one or more colorants, one or more surfactants, one or more crosslinking agents, one or more catalysts, one or more alkaline soluble resins, and one or more additives to improve film forming, lubricity, adhesion, degassing, dry flow or other such property to enhance integrity and/or resilience of the product produced with the composition. The layer of radiation-sensitive material changes from being substantially insoluble to being soluble in at least one of water, an aqueous medium, a non-aqueous inorganic liquid and an organic liquid upon being exposed to radiation. Areas of the coating that are not exposed to the radiation (and are therefore not heated through the absorption and conversion of the radiation to heat) do not exhibit significant change in solubility in developer liquid. The invention provides a positive lithographic printing plate precursor for use with a radiation source, such as conventional imaging systems, computer-to-plate systems or in other direct imaging elements and applications. The converter substance may alternatively be incorporated in a layer that is separate from, but adjacent to, the layer comprising the one or more vinyl polymers. There may also be added an optional protective topcoat. While the radiation-sensitive material may be formulated to be sensitive to various wavelengths of radiation, the preferred wavelengths of radiation-sensitivity for the radiation-sensitive material are between 700nm and 1300nm, and more preferably between 700nm and 1000nm. The hydrophilic substrate may be either a suitably anodized aluminum, or an alternative substrate material or a combination of materials with a suitably durable hydrophilic surface.

In one embodiment of this invention a lithographic printing plate precursor comprises, on a surface of a substrate, an imageable layer comprising one or more vinyl polymers and a radiation-absorbing layer capable of absorbing imaging radiation. The radiation-absorbing layer comprises a suitable converter substance, capable of converting the incident radiation into heat. While it is possible to coat the radiation-absorbing layer on top of the imageable layer, the preferred arrangement is to have the radiation-absorbing layer sandwiched between the imageable layer and the substrate, the imageable layer being substantially transparent to the radiation employed for imaging. When the combined layer structure is illuminated, the radiation-absorbing layer produces heat in the illuminated areas, the heat being then imagewise transferred to the adjacent imageable layer. The imageable layer then undergoes a change in solubility in at least one of water, an aqueous medium, a non-aqueous inorganic liquid and an organic liquid.

This invention comprises one or more vinyl polymers which are homopolymer or copolymer containing monomers comprising at least two functional groups such as both -COOH functional group and -CONH-R functional group, .the monomer with formula I is a example:

HOOC-C=C-CONH-R (formula I)

in which R is a phenolic or aliphatic hydroxyl group or carboxyl group.

Besides monomers comprising at least two functional groups such as formula I, the polymers according to the invention can also contain units of one or more other monomers, which serve to adjust or match the properties of the polymer to specific requirements. Examples of "other monomers" are alkyl, aryl, or (hetero)aralkyl (meth)acrylates, such as methyl methacrylate, phenyl methacrylate, benzyl methacrylate, and furfuryl methacrylate, hydroxyl-containing esters of (meth)acrylic acid (such as hydroxyethyl (meth)acrylate), vinyl alkanoates or vinyl alkyl ethers (such as vinyl acetate or vinyl methyl ether), styrene or substituted styrenes (such as alpha.-methylstyrene or vinyltoluene), (meth)acrylonitrile, unsubstituted or substituted (meth)acrylamide, N-phenylmaleimide, and vinylamides, such as N-vinylpyrrolidone, N-vinylcaprolactam and N-methyl-N-vinylacetamide. Preference is given to esters of (meth)acrylic acid, (meth)acrylonitrile, N-substituted acrylamides and substituted or unsubstituted styrenes. Particular preference is given to units containing aromatic groups, such as benzyl (meth)acrylate, benzylmethacrylamide, N-(meth)acryloylaminomethylphthalimide and substituted or unsubstituted styrenes. The term "(meth)acrylic acid" here and below represents "acrylic acid and/or methacrylic acid". The corresponding situation applies to (meth)acrylonitrile, (meth)acrylamide, (meth)acryloyl-, (meth)acrylate, etc.

The weight average molecular weight M.sub.w of the polymer according to the invention is generally from 1000 to 100,000, preferably from 5000 to 50,000, particularly preferably from 10,000 to 30,000 (determined by GPC with reference to a polystyrene standard). The proportion of monomers comprising at least two functional groups such as formula I in the polymer is generally from 10 to 90 mol%, preferably from 20 to 70 mol%, particularly preferably from 25 to 50 mol%.

The further monomers may also contain reactive groups, as is the case, for example, in N,N'-methylenebismethacrylamide units. They may also contain thermally crosslinkable groups, for example activated groups of the formula --CH.sub.2 --OR . Copolymers containing reactive side groups are also obtained using monomers containing epoxide units, in particular glycidyl methacrylate, or monomers containing pendant, masked isocyanate units. The proportion of these reactive monomers in the polymer according to the invention is up to 5 mol%, preferably from 1 to 4 mol%.

The homopolymerization or copolymerization of the monomers comprising at least two functional groups such as formula I can be carried out by methods which are known to the person skilled in the art, for example in the presence of a polymerization initiator, such as azobisisobutyronitrile or dibenzoyl peroxide, in organic solvents at elevated temperatures for a period of from 1 to 20 hours. In addition, however, it is also possible to carry out a suspension, emulsion, precipitation or bulk polymerization, which can also be initiated by radiation, heat or ionic initiators.

To provide absorption of the irradiating energy in the imageable element of the present invention, one or more converter substances, capable of absorbing incident radiation, preferably infrared radiation, and converting it into heat, is preferably incorporated in the composition. The converter substances suitable for the composition of this invention may be chosen from a wide range of organic and inorganic pigments such as carbon blacks, phthalocyanines or metal oxides. Preferable infrared absorbing materials for use as radiation-to-heat converting compound are those absorbing at wavelengths longer that 700 nm, such as between about 700 and 1300, with near infrared absorbing materials (between about 700 and 1000 nm) being generally used.

For infrared laser sensitive compositions, the dyes that can be used may be any known infrared dyes. Specific examples of dyes which absorb infrared or near infrared rays are, for example, cyanine dyes, methine dyes, naphthoquinone dyes, squarylium colorant, substituted arylbenzo(thio)pyrylium salts, trimethinethia pyrylium salts, pyrylium-based compounds, cyanine colorant, pentamethinethiopyrylium salts and pyrylium compounds.

The pigments or dyes used as converter substances may be added into the composition suitable for furnishing a layer of radiation-sensitive material or a radiation-absorbing layer in an amount of from 0.01 to 60 weight %, preferably from 0.1 to 10 weight %, and especially preferably from 0.5 to 10 weight % in the case of the dye and from 3 to 30 weight % in the case of a pigment, with respect to the entire amount of solids in the furnished layer. If the pigment or dye content is less than 0.01 weight %, sensitivity is lowered.

A compound that modifies the solubility of the polymer in the developer, herein referred to as a "dissolution modifier", may optionally be included in the coating composition. Such compounds, when employed to reduce the dissolution rate of the layer of the radiation-sensitive material include, but are not limited to, dyes, particularly cyanine infrared dyes, certain image colorants and organic compounds. Suitable additives to increase the dissolution rate include but are not limited to poly(vinyl alcohol), poly(ethylene oxide), poly(propylene oxide), amino resins and conventional plasticizers, such as butylphthalyl, polyethyleneglycol, tributyl citrate, dibutyl phthalate, dioctyl phthalate, tricresyl phosphate, tributyl phosphate, tetrahydrofurfuryl oleate, an oligomer or polymer of acrylic acid or methacrylic acid, or the like, sorbitan tristearate, sorbitan monopalmitate, sorbitan trioleate, monoglyceride stearate, polyoxyethylene-nonylphenylether, alkyldi(aminoethyl)glycine, alkylpolyaminoethylglycine hydrochloride, 2-alkyl-N-carboxyethyl-N-hydroxyethylimidazolium betaine, N-tetradecyl-N,N-betaine.

In order to promote the durability of the imaged and optionally processed imageable element of the present invention, one or more suitable crosslinking agents may be added to the composition. Examples include but are not limited to amino resins, phenolic resins, epoxy resins, blocked isocyanates, styrene:maleic anhydride polymers, oxazoline functional polymers or other crosslinking agents such as dicyandiamide and glyoxal. The selection of the appropriate crosslinking agent would be based on available functionality to crosslink with on one of the vinyl polymers of this invention or on other components of the layer. Appropriate catalysts or radical initiators may be required to facilitate the crosslinking process.

In order to achieve processing stability in a broader range of processing conditions, a surfactant or other film-forming agent may optionally be included in the compositions of the invention to facilitate formation of defect-free films. The amount of surfactant is preferably from 0.001 to 10% by weight and more preferably from 0.001 to 5% by weight of the material for the composition. Examples include but are not limited to amphoteric, non-ionic, cationic, anionic, silicone and fluoro surfactants.

Image colorants may optionally be included in the compositions of the invention in order to provide greater visibility to the image area. As the image colorant, pigments or dyes other than those employed as converter substance may be used. Examples of preferred dyes, including the salt forming organic dyes, include, but are not limited to, oil-soluble dyes and basic dyes. Specific examples are Oil-Yellow #101, Oil Yellow #103, Oil Pink #312, Oil Green BG, Oil Blue BOS, Oil Blue #603, Oil Black BY, Oil Black BS, Oil Black T-505 (all of which are manufactured by Orient Chemical Industries Co,. Ltd.), Victoria Pure Blue BO, the tetrafluoroborate salt of Basic Blue. Specific examples include Victoria Pure Blue BO7, Crystal Violet (C142555), Methyl Violet (C142535), Ethyl Violet, Rhodamine B (CI145170B), Malachite Green (C142000), Methylene Blue (C152015), or the like. The dye may be added into the material for the printing plate in an amount of preferably from 0.01 to 10 weight % and more preferably from 0.5 to 8 weight % of the entire solid contents of the material for the composition.

Suitable adhesion promoters may optionally be included in the compositions of the invention. Suitable ones include, but are not limited to, di-acids, triazoles, thiazoles and alkyne containing materials. The adhesion promoters may be used in amounts between 0.01 and 3% by weight.

Suitable substrates which may be treated to render them hydrophilic or hydrophobic, including doing so by adding further layers on top, may include, but are not limited to, fiber-derived substrates, metallic substrates, inorganic substrates such as ceramics, and polymeric substrates, including combinations of the aforesaid. Particular examples may include, but are not limited to, paper; paper on which plastic such as polyethylene, polypropylene, polystyrene or the like is laminated; a metal plate such as an aluminum, anodized aluminum, zinc or copper plate; a copper foil, reverse treated copper foil, drum side treated copper foil and double treated copper foil clad on a plastic laminate, a plastic film formed of, for example, cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, or polyvinyl acetal; a paper or a plastic film on which the aforementioned metal is vapor-deposited or laminated; glass or glass in which a metal or metal oxide is vapor deposited or the like.

As the substrate for a positive-working lithographic printing precursor, a polyester film, or an aluminum plate is preferred, and an aluminum plate is especially preferred because of its stable dimensions and relatively low cost. A plastic film on which aluminum is laminated or vapor-deposited may be used. The composition of the aluminum plate applied to the present invention is not specified, and the aluminum plate may be prepared according to any of the known methods, for example of roughening, anodizing and post anodizing treatments. The thickness of the aluminum plate used in the present embodiment is from about 0.1 to 0.6 mm, preferably from 0.15 to 0.5 mm.

In the present specification, the phrase "hydrophilic substrate" refers to a substrate of which the surface is hydrophilic. This may include a sheet of a single material, which may optionally have been treated to enhance its surface hydrophilic properties, such as anodized aluminum, or may alternatively comprise a substrate on which further layers have been fashioned, the surface of the topmost of the further layers being hydrophilic. In the present specification, the phrase "hydrophobic substrate" refers to a substrate of which the surface is hydrophobic. This may include a sheet of a single material, which may have been treated to enhance its surface hydrophobic properties, or may alternatively comprise a substrate on which further layers have been fashioned, the surface of the topmost of the further layers being hydrophobic.

The imageable element of this invention can be produced by dissolving the components of the composition into one or more appropriate solvent, filtering if necessary, and applying from a liquid in a manner known, such as, for example, bar coater coating, spin coating, rotating coating, spray coating, curtain coating, dip coating, air knife coating, blade coating, and roll coating, or the like, onto a suitable substrate. Appropriate solvents include, but are not limited, to methylene chloride, ethylene dichloride, cyclohexanone, methyl ethyl ketone, acetone, methanol, n-propanol, isopropanol, ethyleneglycol monomethyl ether, 1-methoxy-2-propanol, 2-methoxyethyl acetate, 1-methoxy-2-propyl acetate, dimethoxyethane, methyl formate, methyl lactate, ethyl lactate, xylene and toluene or the like. The concentration of all of the solid components in the solvent is preferably from 1 to 70 weight %. The applied amount (of the solid) on the substrate, as obtained after application and drying, differs in accordance with the use, but in general, is preferably from 0.1 to 12.0 grams per square meter according to the application.

The imageable element of this invention can be produced by mixing the components of the composition using any one of a number of known processes including, but not limited to, dry premixing in a blender, followed by extrusion, roll-out, kibbling and micronization, incorporation of dry flow additives into the finished powder. The micronization may be achieved via two separate steps of mechanical attrition followed by particle-particle bombardment such as jet-milling. Alternatively, the powder mix may be obtained by controlled precipitation, spray drying from solvent or supercritical CO₂, spinning hot-cup effusion or other suitable techniques.

An implementation of the present invention requires the treatment of the imagewise irradiated precursor with a developer liquid. The developer liquid removes one of the irradiated and unirradiated areas of the layer of radiation-sensitive material. The developer may comprise at least one of water, an aqueous medium, a non-aqueous inorganic liquid and an organic liquid. For each selection of composition employed to produce an imageable element, there is an optimal choice of developer. Aqueous alkaline media suitable as developers include, but are not limited to, aqueous solutions of organic amines, for example, primary, secondary or tertiary alkyl amines, alcoholamines and alkyl diamines and conventionally known alkalis with anions selected from silicates, hydroxide, carbonates, phosphates and borates and cations selected from alkali metals, alkaline earth metals, ammonium and substituted ammonium , such as tetraalkylammonium. Aqueous acidic media suitable as developers include, but are not limited to, aqueous mineral acids such as hydrochloric, sulfuric, nitric and phosphoric acid, solutions of acidic salts such as ferric chloride, carboxylic acids such as acetic acid, sulfur and phosphorous-based organic or inorganic acids. Non-aqueous inorganic liquids suitable as developers include, but are not limited to, silicone oils. Organic liquids suitable as developers include, but are not limited to ketones, amides, esters, ethers, glycolethers, lactones, alcohols, halogenated solvents, silicone solvents, sulfoxides, amides, sulfones, lactams as well as aliphatic and aromatic hydrocarbons.

In the case of aqueous media employed as developers, various surfactants or organic solvents may optionally be added to the developing solution to accelerate or control developability, improve the dispersibility of development residues, and/or improve the affinity of image portions on the printing plate for ink.

After development, if such is required, the imagewise irradiated imageable element may be post-processed with water; optionally containing, for example, a surfactant. In the case of lithographic printing masters a desensitizing solution containing gum Arabic, a starch derivative, a surfactant or other suitable water-soluble polymeric material may be used and optionally a post-processing heat treatment. Various combinations of these treatments can be used as the post-processing carried out when the imageable medium of the present embodiment is used in its different applications.

### Examples

The following examples illustrate aspects of the invention. Materials were sourced as shown in Table 1:

**Table 1**

| Material | Source |
|---|---|
| Maleic anhydride | Sigma-Aldrich |
| p-Aminophenol | Sigma-Aldrich |
| Styrene | Sigma-Aldrich |
| Methyl methacrylate | Sigma-Aldrich |
| Ethyl methacrylate | Sigma-Aldrich |
| Methacrylic acid | Sigma-Aldrich |
| Butyl methacrylate | Sigma-Aldrich |
| N-(2-hydroxyethyl)methacrylamide | Sigma-Aldrich |
| p-Toluene sulfonyl chloride | Sigma-Aldrich |
| Triethyl amine | Sigma-Aldrich |
| Azobisisobutyronitrile | Sigma-Aldrich |
| PF6564LB | Bakelite company |
| 0744LB01 | Bakelite company |
| 6866LB02 | Bakelite company |
| ADS830A | American Dye Source |
| Crystal Violet colorant | Dudley Chemical Corporation |
| Victoria Pure Blue BOH: | Sigma-Aldrich |
| acetone | Sigma-Aldrich |
| Methyl ethyl ketone | Sigma-Aldrich |
| 1-Methoxy-2-propanol | Sigma-Aldrich |
| Ethanol (Anhydrous Ethyl Alcohol) | Commercial Alcohol |

### Synthesis Examples

### SYNTHESIS EXAMPLE 1 FOR MONOMER OF THE FORMULA I (MALEIMIDE ACID)

49 g of maleic anhydride was dissolved in 125m1 acetone. 86 g p-aminophenol in 400 acetone was then added dropwise with ice cooling. When the addition was complete, the mixture was stirred at room temperature for one day, and the maleimide acid was filtered and then dried under vacuum.

### SYNTHESIS EXAMPLE 2 FOR VINYL COPOLYMER A

60 ml ethanol and 140 ml Dowanol PM were placed in a 500 ml round-bottomed flask equipped with a stirrer, thermometer, nitrogen inlet and reflux condenser. 4g maleimide acid, 16 g styrene. And 3 g acrylnitrile were added and dissolved with stirring. 0.8 g 2,2-Azobisisobutyronitrile (AIBN) was added and the reaction mixture heated at 80.degree. C. with stirring for 12 hrs. Then water was added, and the precipitated copolymer filtered, washed twice with methanol, and dried in the oven at 40.degree. C. for 2 days.

### SYNTHESIS EXAMPLE 3 FOR VINYL COPOLYMER B

174 ml ethanol and 116 ml Dowanol PM were placed in a 500 ml round-bottomed flask equipped with a stirrer, thermometer, nitrogen inlet and reflux condenser . 55 g maleimide acid, 30 g styrene, 4 g methacrylic acid and 34 g methyl methacrylate were added and dissolved with stirring. 1 g 2,2-Azobisisobutyronitrile (AIBN) was added and the reaction mixture heated at 80.degree. C. with stirring for 12 hrs. Then water was added, and the precipitated copolymer filtered, washed twice with methanol, and dried in the oven at 40.degree. C. for 2 days.

### SYNTHESIS EXAMPLE 4 FOR VINYL COPOLYMER C

125 ml ethanol and 190 ml Dowanol PM were placed in a 500 ml round-bottomed flask equipped with a stirrer, thermometer, nitrogen inlet and reflux condenser. 6.4 g maleimide acid, 22.0 g styrene, 3.6g N-(2-hydroxyethyl)methacrylamide and 34.0 g methyl methacrylate were added and dissolved with stirring. 0.35 g 2,2-Azobisisobutyronitrile (AIBN) was added and the reaction mixture heated at 80.degree. C. with stirring for 12 hrs. Then water was added, and the precipitated copolymer filtered, washed twice with methanol, and dried in the oven at 40.degree. C. for 2 days.

### SYNTHESIS EXAMPLE 5 FOR VINYL COPOLYMER D

57 ml ethanol and 38 ml Dowanol PM were placed in a 500 ml round-bottomed flask equipped with a stirrer, thermometer, nitrogen inlet and reflux condenser. 15.0 g maleimide acid, 11.5 g styrene and 12.7 g methyl methacrylate were added and dissolved with stirring. 0.16 g 2,2-Azobisisobutyronitrile (AIBN) was added and the reaction mixture heated at 80.degree. C. with stirring for 12 hrs. Then water was added, and the precipitated copolymer filtered, washed twice with methanol, and dried in the oven at 40.degree. C. for 2 days.

### SYNTHESIS EXAMPLE 6 FOR VINYL COPOLYMER E

57 ml ethanol and 38 ml Dowanol PM were placed in a 500 ml round-bottomed flask equipped with a stirrer, thermometer, nitrogen inlet and reflux condenser .15 g maleimide acid, 8.3 g styrene and 12.0 g ethyl methacrylate were added and dissolved with stirring. 0.13 g 2,2-Azobisisobutyronitrile (AIBN) was added and the reaction mixture heated at 80.degree. C. with stirring for 12 hrs. Then water was added, and the precipitated copolymer filtered, washed twice with methanol, and dried in the oven at 40.degree. C. for 2 days.

### SYNTHESIS EXAMPLE 7 FOR VINYL COPOLYMER F

57 ml ethanol and 38 ml Dowanol PM were placed in a 500 ml round-bottomed flask equipped with a stirrer, thermometer, nitrogen inlet and reflux condenser 15 g maleimide acid, 8.3 g styrene and 15.0 g butyl methacrylate were added and dissolved with stirring. 0.13 g 2,2-Azobisisobutyronitrile (AIBN) was added and the reaction mixture heated at 80.degree. C. with stirring for 12 hrs. Then water was added, and the precipitated copolymer filtered, washed twice with methanol, and dried in the oven at 40.degree. C. for 2 days.

### SYNTHESIS EXAMPLE 8 FOR DISSOLUTION MODIFIER A

This example describes the preparation of a dissolution modifier A. Dry novolac resin (50g) is dissolved by stirring in acetone (325 g) in a 600 mL beaker and the solution cooled to about 10.degree. C. p-Toluene sulfonyl chloride (30g) is added over a period of about 1 min. Triethyl amine (14.77g) is added at about 10.degree. C. over a period of about 1 hr and the reaction mixture stirred at .ltoreq.15.degree. C. for 1 hr. Acetic acid (1.36 g) is added at about 10.degree. C. over about 1 min and the reaction mixture stirred for about 15 min.

A mixture of 3.0 Kg of ice and 3.0 Kg of water is placed in a 7.5 L breaker. Acetic acid (5 g) is added with stirring and the mixture stirred at about 15.degree. C. for about 1 min. About 25% of the reaction mixture is added and the mixture stirred for about 20 min. The reaction mixture is allowed to settle for about 20 min and the supernatant decanted from the precipitate.

Water (about 1.9 Kg) is added to the precipitate and the resulting mixture stirred for 5 min at about 15.degree. C. The precipitate is allowed to settle for 20 min and the supernatant decanted. The process is repeated with the remaining three portions of the reaction mixture. The precipitate is collected and dried to yield about 78 g of product. By this procedure a dissolution modifier A is prepared.

### SYNTHESIS EXAMPLE 9 FOR DISSOLUTION MODIFIER B

This example describes the preparation of a dissolution modifier B. Dry novolac resin (50g) is dissolved by stirring in acetone (325 g) in a 600 mL beaker and the solution cooled to about 10.degree. C. p-Toluene sulfonyl chloride (15g) is added over a period of about 1 min. Triethyl amine (7.34g) is added at about 10.degree. C. over a period of about 1 hr and the reaction mixture stirred at .Itoreq.15.degree. C. for 1 hr. Acetic acid (1.36 g) is added at about 10.degree. C. over about 1 min and the reaction mixture stirred for about 15 min.

A mixture of 3.0 Kg of ice and 3.0 Kg of water is placed in a 7.5 L breaker. Acetic acid (5 g) is added with stirring and the mixture stirred at about 15.degree. C. for about 1 min. About 25% of the reaction mixture is added and the mixture stirred for about 20 min. The reaction mixture is allowed to settle for about 20 min and the supernatant decanted from the precipitate.

Water (about 1.9 Kg) is added to the precipitate and the resulting mixture stirred for 5 min at about 15.degree. C. The precipitate is allowed to settle for 20 min and the supernatant decanted. The process is repeated with the remaining three portions of the reaction mixture. The precipitate is collected and dried to yield about 64 g of product. By this procedure a dissolution modifier B is prepared.

### Preparation of the Lithographic Base

A 0.25 mm thick aluminum sheet was degreased by immersing the sheet in an aqueous solution containing 8 g/l of sodium hydroxide at 40.degree. C. and rinsed with demineralized water. The sheet was then electrochemically grained using an alternating current in an aqueous solution containing 3.5 g/l of hydrochloric acid, 3.5 g/l of hydroboric acid and 4 g/l of aluminum ions at a temperature of 30.degree. C. and a current density of 1100 A/m.sup.2 to form a Ra of 0.45 .mu.m.

After demineralized water rinse, the aluminum foil was then immersed in an aqueous solution containing 250 g/l of sulfuric acid at 65.degree. C. for 150 seconds and rinsed with demineralized water at 30.degree. C. for 25 seconds.

The foil was subsequently subjected to anodic oxidation in an aqueous solution containing 250 g/l of sulfuric acid at a temperature of 40.degree. C., a voltage of about 12.5 V and a current density of 200 A/m.sup.2 for about 250 seconds to form an anodic oxidation film of 2.5 g/m.sup.2 of Al.sub.2 O.sub.3 then washed with demineralized water, posttreated with a solution containing polyvinylphosphonic acid, rinsed with demineralized water at 20.degree. C. during 90 seconds and dried.

### Example 1:

In this example, solvent-resistances of disclosed copolymers and other Polymers are compared. Basic composition is listed as follows:

| Material: | Content |
|---|---|
| Polymer: | 9.8 g |
| ADS830A | 0.1 g |
| Victoria Pure Blue BOH: | 0.1 g |
| Methyl ethyl ketone | 10 g |
| 1-Methoxy-2-propanol | 80 g |

Chemical resistance was tested with a mixture consisting of either 80% DAA (diacetone alcohol) and 20% water, or 80% butyl glycol and 20% water, or 80% isopropanol and 20% water. Time that coating was completely removed has been recorded and listed in Table 2.

**Table 2: A comparison of solvent resistance of vinyl copolymers and Novalac resins without dissolution modifier**

| Polymer | 80% DAA | 80% BG | 80%IPA |
|---|---|---|---|
| PF6564LB | 20 s | 15 s | 15 s |
| 0744LB01 | 25 s | 20 s | 15 s |
| 6866LB02 | 25 s | 20 s | 30 s |
| Vinyl copolymer A | 74 m | 190 | >60 m |
| Vinyl copolymer B | 105 s | 60 s | 100 s |
| Vinyl copolymer C | 225 s | 85 s | 900 s |
| Vinyl copolymer D | 90 m | 120 s | 960 s |
| Vinyl copolymer E | 370 s | 65 s | 530 s |
| Vinyl copolymer F | 185 s | 45 s | 765 s |

| | | | |
|---|---|---|---|
| DAA: diacetone alcohol; BG: butyl glycol; IPA: isopropanol. S: second; m: minute. | | | |

Results listed in Table 2 clearly demonstrate that disclosed vinyl copolymers have much greater solvent resistance compared to novalac type resins.

### Example 2:

In this example, solvent-resistances of disclosed vinyl copolymer and other Polymers are further compared. Basic composition is listed as follows:
Basic composition is listed as follows:

| Material: | Content |
|---|---|
| Polymer: | 6.3 g |
| Dissolution modifier A | 3.5 g |
| ADS830A | 0.1 g |
| Victoria Pure Blue BOH: | 0.1 g |
| Methyl ethyl ketone | 10 g |
| 1-Methoxy-2-propanol | 80 g |

**Table 3: A comparison of solvent resistance of vinyl copolymers and Novalac resins with dissolution modifier**

| Polymer | 80% DAA | 80% BG | 80%IPA |
|---|---|---|---|
| PF6564LB | 30 s | 35 s | 15 s |
| 0744LB01 | 40 s | 30 s | 20 s |
| 6866LB02 | 55 s | 20 s | 20 s |
| Vinyl copolymer A | 225 s | 110 s | No change after 65 minutes |
| Vinyl copolymer B | 110 s | 35 s | 225 s |
| Vinyl copolymer C | 255 s | 55 s | No change after 10 minutes |
| Vinyl copolymer D | 235 s | 75 s | No change after 10 minutes |
| Vinyl copolymer E | 135 s | 50 s | No change after 10 minutes |
| Vinyl copolymer F | 95 s | 60 s | No change after 10 minutes |

| | | | |
|---|---|---|---|
| DAA: diacetone alcohol; BG: butyl glycol; IPA: isopropanol. S: second; m: minute. | | | |

Results listed in Table 3 clearly demonstrate once again that disclosed vinyl copolymers have much greater solvent resistance compared novalac type resins.

### Example 3:

A photosensitive solution 1 described below was prepared, filtered and coated on the surface of an anodized aluminum substrate using a spin coater. After drying in an oven at 110°C for 5 minutes, the resulting plate had a dry coating weight of 1.6 g/m2.

### Photosensitive solution 1

| | |
|---|---|
| Infrared ray absorbing agent ADS830A | 0.10 g |
| Vinyl copolymer A | 6.30 g |
| Dissolution modifier A | 3.5 g |
| Victoria Pure Blue BOH: | 0.1 g |
| Methyl ethyl ketone | 10 g |
| 1-Methoxy-2-propanol | 80 g |

The plate was imaged in a Creo Lotem 400 Quantum with an imaging energy density of 300mJ/cm² applying a pattern containing a section of resolution equal to 200 lines per inch of varying dot size. The plate was developed in 8% pottasium hydroxide solution in water for 60 seconds until clear background was obtained, rinsed off with water and dried. The weight loss from unexposed areas of the plate was about 25%.

### Example 4:

A photosensitive solution 2 described below was prepared, filtered and coated on the surface of an anodized aluminum substrate using a spin coater. After drying in an oven at 110°C for 5 minutes, the resulting plate had a dry coating weight of 1.6 g/m2.

### Photosensitive solution 2

| | |
|---|---|
| Infrared ray absorbing agent ADS830A | 0.10 g |
| Vinyl copolymer B | 6.30 g |
| Dissolution modifier A | 3.5 g |
| Victoria Pure Blue BOH: | 0.1 g |
| Methyl ethyl ketone | 10 g |
| 1-Methoxy-2-propanol | 80g |

The plate was imaged in a Creo Lotem 400 Quantum with an imaging energy density of 150mJ/cm² applying a pattern containing a section of resolution equal to 200 lines per inch of varying dot size. The plate was developed in 4% potassium hydroxide solution in water for 60 seconds until clear background was obtained, rinsed off with water and dried. The weight loss from unexposed areas of the plate was about 25%.

### Example 5:

A photosensitive solution 3 described below was prepared, filtered and coated on the surface of an anodized aluminum substrate using a spin coater. After drying in an oven at 110°C for 5 minutes, the resulting plate had a dry coating weight of 1.6 g/m2.

### Photosensitive solution 3

| | |
|---|---|
| Infrared ray absorbing agent ADS830A | 0.10 g |
| Vinyl copolymer C | 6.30 g |
| Dissolution modifier A | 3.5 g |
| Victoria Pure Blue BOH: | 0.1 g |
| Methyl ethyl ketone | 10 g |
| 1-Methoxy-2-propanol | 80 g |

The plate was imaged in a Creo Lotem 400 Quantum with an imaging energy density of 300mJ/cm² applying a pattern containing a section of resolution equal to 200 lines per inch of varying dot size. The plate was developed in 4% pottasium hydroxide solution in water for 20 seconds until clear background was obtained, rinsed off with water and dried. The weight loss from unexposed areas of the plate was about 15%. The imaged plate was mounted onto a Ryobi 520 press and dampened with fountain solution for 30 seconds before ink was applied to the plate and a press run performed. The press run was aborted at 10,000 impressions without visible degradation of printing quality. At this point the 1% dots of the 200 lines per inch pattern were substantially intact.

### Example 6:

A photosensitive solution 4 described below was prepared, filtered and coated on the surface of an anodized aluminum substrate using a spin coater. After drying in an oven at 110°C for 5 minutes, the resulting plate had a dry coating weight of 1.6 g/m2.

### Photosensitive solution 4

| | |
|---|---|
| Infrared ray absorbing agent ADS830A | 0.10 g |
| Vinyl copolymer D | 6.30 g |
| Dissolution modifier A | 3.5 g |
| Victoria Pure Blue BOH: | 0.1 g |
| Methyl ethyl ketone | 10 g |
| 1-Methoxy-2-propanol | 80 g |

The plate was imaged in a Creo Lotem 400 Quantum with an imaging energy density of 170mJ/cm² applying a pattern containing a section of resolution equal to 200 lines per inch of varying dot size. The plate was developed in 8% pottasium hydroxide solution in water for 70 seconds until clear background was obtained, rinsed off with water and dried. The weight loss from unexposed areas of the plate was about 10%. The imaged plate was mounted onto a Ryobi 520 press and dampened with fountain solution for 30 seconds before ink was applied to the plate and a press run performed. The press run was aborted at 10,000 impressions without visible degradation of printing quality. At this point the 1 % dots of the 200 lines per inch pattern were substantially intact.

### Example 7:

A photosensitive solution 5 described below was prepared, filtered and coated on the surface of an anodized aluminum substrate using a spin coater. After drying in an oven at 110°C for 5 minutes, the resulting plate had a dry coating weight of 1.6 g/m2.

### Photosensitive solution 5

| | |
|---|---|
| Infrared ray absorbing agent ADS830A | 0.10 g |
| Vinyl copolymer E | 6.30 g |
| Dissolution modifier A | 3.5 g |
| Victoria Pure Blue BOH: | 0.1 g |
| Methyl ethyl ketone | 10 g |
| 1-Methoxy-2-propanol | 80 g |

The plate was imaged in a Creo Lotem 400 Quantum with an imaging energy density of 300mJ/cm² applying a pattern containing a section of resolution equal to 200 lines per inch of varying dot size. The plate was developed in 8% pottasium hydroxide solution in water for 30 seconds until clear background was obtained, rinsed off with water and dried. The weight loss from unexposed areas of the plate was about 10%. The imaged plate was mounted onto a Ryobi 520 press and dampened with fountain solution for 30 seconds before ink was applied to the plate and a press run performed. The press run was aborted at 10,000 impressions without visible degradation of printing quality. At this point the 1% dots of the 200 lines per inch pattern were substantially intact.

### Example 8:

A photosensitive solution 6 described below was prepared, filtered and coated on the surface of an anodized aluminum substrate using a spin coater. After drying in an oven at 110°C for 5 minutes, the resulting plate had a dry coating weight of 1.6 g/m2.

### Photosensitive solution 6

| | |
|---|---|
| Infrared ray absorbing agent ADS830A | 0.10 g |
| Vinyl copolymer F | 6.30 g |
| Dissolution modifier A | 3.5 g |
| Victoria Pure Blue BOH: | 0.1 g |
| Methyl ethyl ketone | 10 g |
| 1-Methoxy-2-propanol | 80 g |

The plate was imaged in a Creo Lotem 400 Quantum with an imaging energy density of 200mJ/cm² applying a pattern containing a section of resolution equal to 200 lines per inch of varying dot size. The plate was developed in 8% pottasium hydroxide solution in water for 80 seconds until clear background was obtained, rinsed off with water and dried. The weight loss from unexposed areas of the plate was about 10%. The imaged plate was mounted onto a Ryobi 520 press and dampened with fountain solution for 30 seconds before ink was applied to the plate and a press run performed. The press run was aborted at 10,000 impressions without visible degradation of printing quality. At this point the 1 % dots of the 200 lines per inch pattern were substantially intact.

### Example 9:

A photosensitive solution 7 described below was prepared, filtered and coated on the surface of an anodized aluminum substrate using a spin coater. After drying in an oven at 110°C for 5 minutes, the resulting plate had a dry coating weight of 1.6 g/m2.

### Photosensitive solution 7

| | |
|---|---|
| Infrared ray absorbing agent ADS830A | 0.1 g |
| Vinyl copolymer B | 6.3 g |
| Novalac resin PF6564LB | 2.0 g |
| Dissolution modifier B | 1.5 g |
| Victoria Pure Blue BOH: | 0.1 g |
| Methyl ethyl ketone | 10 g |
| 1-Methoxy-2-propanol | 80 g |

The plate was imaged in a Creo Lotem 400 Quantum with an imaging energy density of 150mJ/cm² applying a pattern containing a section of resolution equal to 200 lines per inch of varying dot size. The plate was developed in 8% pottasium hydroxide solution in water for 60 seconds until clear background was obtained, rinsed off with water and dried. The weight loss from unexposed areas of the plate was below 10%. The imaged plate was mounted onto a Ryobi 520 press and dampened with fountain solution for 30 seconds before ink was applied to the plate and a press run performed. The press run was aborted at 10,000 impressions without visible degradation of printing quality. At this point the 1 % dots of the 200 lines per inch pattern were substantially intact.

### Example 10:

A photosensitive solution 8 described below was prepared, filtered and coated on the surface of an anodized aluminum substrate using a spin coater. After drying in an oven at 110°C for 5 minutes, the resulting plate had a dry coating weight of 1.6 g/m2.

### Photosensitive solution 8

| | |
|---|---|
| Infrared ray absorbing agent ADS830A | 0.1 g |
| Vinyl copolymer D | 6.3 g |
| Novalac resin PF6564LB | 2.0 g |
| Dissolution modifier B | 1.5 g |
| Victoria Pure Blue BOH: | 0.1 g |
| Methyl ethyl ketone | 10 g |
| 1-Methoxy-2-propanol | 80 g |

The plate was imaged in a Creo Lotem 400 Quantum with an imaging energy density of 150mJ/cm² applying a pattern containing a section of resolution equal to 200 lines per inch of varying dot size. The plate was developed in 8% pottasium hydroxide solution in water for 60 seconds until clear background was obtained, rinsed off with water and dried. The weight loss from unexposed areas of the plate was below 10%. The imaged plate was mounted onto a Ryobi 520 press and dampened with fountain solution for 30 seconds before ink was applied to the plate and a press run performed. The press run was aborted at 10,000 impressions without visible degradation of printing quality. At this point the 1 % dots of the 200 lines per inch pattern were substantially intact.

## Claims

1. A positive-working photosensitive composition, comprising at least one vinyl copolymer ;

2. The positive-working photosensitive composition according to claim 1, wherein said vinyl copolymer comprising vinyl monomers for free radical copolymerization;

3. The positive-working photosensitive composition according to claim 1, wherein said vinyl copolymer having alkali-soluble groups.

4. The positive-working photosensitive composition according to claim 2, wherein said vinyl monomers comprising at least two functional groups.

5. The positive-working photosensitive composition according to claim 4, wherein said two functional groups are COOH functional group and -CONH-R functional group as shown as formula I
HOOC-C=C-CONH-R (formula I)

6. The positive-working photosensitive composition according to claim 5, wherein said R is selected from the group consisting of a phenolic or aliphatic hydroxyl group and carboxyl group.

7. The positive-working photosensitive composition of claim 1, further comprising one converter substance capable of converting light into heat.

8. The positive-working photosensitive composition of claim 7, wherein the infrared light has a wavelength between 700 and 1000nm.

9. The positive-working photosensitive composition of claim 1, further comprising one or more other polymers.

10. The positive-working photosensitive composition of claim 1, further comprising a dissolution modifier.

11. The positive-working photosensitive composition of claim 1, further comprising a colorant.

12. The positive-working photosensitive composition of claim 1, further comprising a surfactant.

13. The use of at least one vinyl copolymer in a positive working photosensitive element.

14. The use according to claim 13, wherein the vinyl copolymer is as defined in claims 2, 3, 4 or 5.
